# EUROPEAN PATENT SPECIFICATION

(11) **EP 0 795 151 B1**
(45) Date of publication and mention of the grant of the patent: **13.02.2002**
(21) Application number: 95939450.3
(22) Date of filing: 22.11.1995
(51) Int. Cl.: G06F 1/00, G06F 12/14

(54) **A METHOD FOR CONTROLLING ACCESS TO A DATA BASE, A DATA BASE AND A COMPUTER NETWORK USING THE SAME**
DATENBANKZUGRIFFSVERFAHREN, EINE DATENBANK UND EIN DIESES VERFAHREN VERWENDENDES RECHNERNETZ
PROCEDE DE GESTION D'ACCES A UNE BASE DE DONNEES, BASE DE DONNEES ET RESEAU INFORMATIQUE L'UTILISANT

(30) Priority: 29.11.1994 SE 9404157
(43) Date of publication of application: 17.09.1997
(73) Proprietor: TELIA AB, 123 86 Farsta (SE)
(72) Inventor: BIGGE, Peter, S-114 54 Stockholm (SE)
(74) Representative: Akerman, Marten Lennart
(86) International application number: SE9501394
(87) International publication number: WO9617286

(56) References cited:
- EP-A- 0 501 475
- US-A- 5 347 578
- 1990 IEEE COMPUTER SOCIETY SYMPOSIUM ON RESEARCH IN SECURITY AND PRIVACY, May 1990, ROBERT W. BALDWIN, "Naming and Grouping Privileges to Simplify Security Management in Large Databases", pages 116-132.
- 1988 IEEE SYMPOSIUM ON SECURITY AND PRIVACY, April 1988, STEPHEN T. VINTER, "Extended Discretionary Access Controls", pages 39-49.

## Description

The present invention relates to an improved procedure for defining user access rights to a data base, data bases using said procedure and computer networks on which such databases may be operated.

Administration of large data bases with large numbers of users has a number of problems associated with operation of the data base. Consider a data base which:
- uses a single file server as a platform;
- has a large number of users, of the order of 20,000, half of which are simultaneously logged on to the system;
- has a single level of administration security;
- operates various data base procedures each of which may include some functions denied to certain users; and
- contains data on various subjects, having diverse security ratings, some of which may only be available to a subset of data base users.

Users of such a data base will normally have a need to use several data base applications in parallel. Users may have restricted access rights as between different data base subjects, or even within a subject. For example, a given user may be allowed access to telephone number lists for the Stockholm area, but be denied access to data on financial ledgers. Certain telephone numbers may be regarded as secret and access to such numbers may be denied to all except a few users. If there is only a single level of administration available, the system administrator role is the only means by which new identities can be created. Unfortunately, this role is able to access all information on the system, erase portions of the data, or even the entire data base, or even switch off the file server on which the data base is stored. The problem of controlling access to such a data base, without imposing an excessive computational load on a file server and, thereby seriously slowing down its speed of operation, is by no means easy to solve.

In order to achieve this, the access rights of each of some 20,000 users must be broken down:
- by class of subject matter;
- within subject matter classes, by secret data; and
- by data base operation.

During the performance of a given data base task for a given user, different access rights may come into play.

If effective data base security is to be preserved, it is vital that all data base access rules be held on the file server. If such rules were held on client controlled equipment they could be subverted by a dishonest client.

It has been proposed that management of client identities and access rights be controlled in front of the file server. Such front-end based systems establish a number of parallel connections in relation to general identity. This creates overhead problems, performance problems and log-in problems for the file server.

Where a data base can be accessed by a small number of users only, from ten to a few hundred, a number of small fixed groups of users may be established and identities associated with these groups. This solution is not viable where large numbers of users are involved.

EP 501 475 discloses a distributed data system in which processes running in trusted systems whose results may be proprietary or sensitive in nature may be invoked by operators at remote, untrusted workstations. Said processes are provided with locks which do not permit proprietary or sensitive actions unless a request includes a key matching the lock. A method of associating keys with operators is based on each operator's presenting his ID and a valid password at the workstation at the time he logs on to the system, verifying his password in a trusted system, correlating his ID with a role or group of roles he is authorized to fulfill, and retrieving and storing in the memory of the trusted system, associated with the operator's ID, a list of keys (a "keyring") for each of those roles. The operator's ID is appended to every request he invokes, a process containing a lock interrogates the stored list and will not grant a proprietary action unless the stored list contains a key matching the lock.

The present invention solves the problem of access control in a large data base with a large number of users as set out in independent apparatus claims 1 and 9 and independent method claim 17.

Specifically, it defines access rights separately for each application run on the data base. A plurality of data base roles are defined, in terms of the basic data base procedures CRUD, (create, read, update and delete), which a user is entitled to use in respect of the various value sets stored in the data base. A given user is given access to a set of roles on an application-by-application basis. When a user logs-in to a particular data base application, to which he has access, a procedure is run by the file server on which the data base is stored. The file server generates the access rights for that user in respect of that application. The user rights are then stored in the file server, preferably on a cache memory, for the time in which the application in question is running on the file server. Preferably, when the user logs-out of that application the access rights are deleted from store.

It should be noted that with a data base, of the type to which this invention relates, which is subject to heavy user demands, it may be advantageous to inhibit command mode operation in real time. None-the-less, the present invention may still be applicable to data base systems which can be operated in command mode.

Embodiments of the invention will now be described, by way of example, with reference to the accompanying drawings in which:

Figure 1 illustrates the relationship established between user identities, roles and applications in a data base according to the present invention.

Figure 2 illustrates how a defined role determines the access rights of a given user to a given application on a database according to the present invention.

Figure 3 shows a signal chart for an embodiment of the present invention operating on a SQL file server.

Figure 4 illustrates, in diagrammatic form, an example of a platform on which a data base according to the present invention may be run.

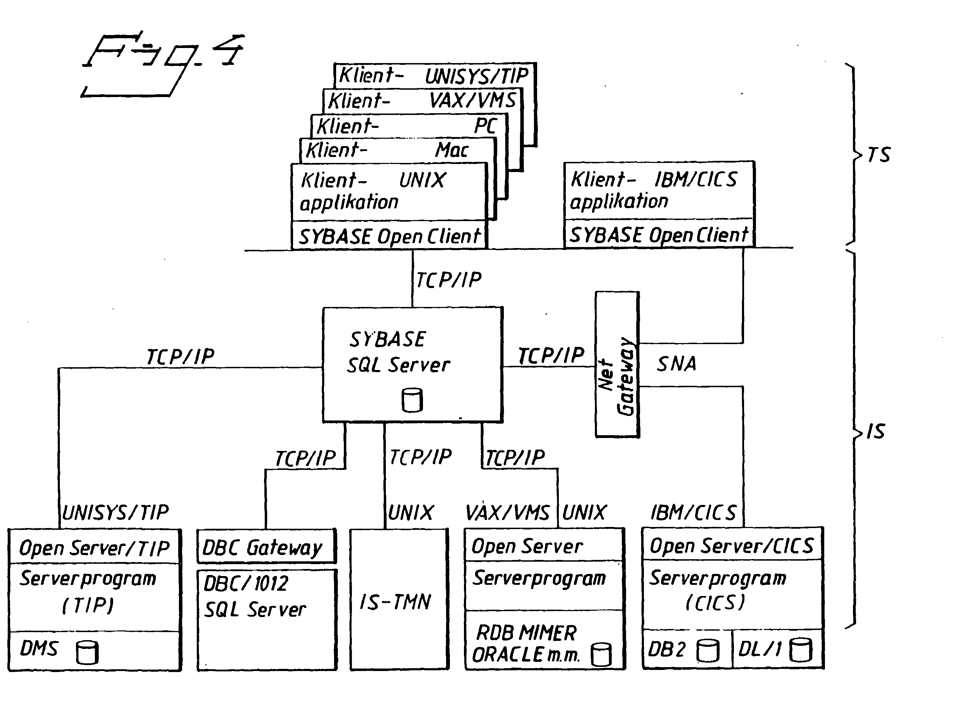

An example of a computer network platform on which the present invention can be realised is illustrated in Figure 4. The operation of such a platform will be immediately apparent, to those skilled in the art, from a brief examination of Figure 4. However, it should be noted that a plurality of terminals using a variety of operating systems, collectively referred to as the application system TS, can be connected to a central file server, the SQL server, by means of Sybase communications software which is herein referred to as Open Client. A variety of systems, referred to as Open Servers, may be used for preparing data base procedures and applications. The Open Servers again communicate with the central server by means of Sybase communications software. The central SQL server carries all the data which comprises the data base, and operates on SQL procedure language. That portion of the computer network which includes the central SQL server and the Open Servers is collectively referred to as the information system, IS. The open servers and applications system may use a variety of operating systems and software, including UNISYS®/TIP®, VAX®/VMS®,PC, MAC, UNIX®, and IBM®/CICS®.

In the operation of a data base, different roles can be identified. In a simple database, there exists two roles, that of system administrator and that of a user who wishes to access data. However, in a very large database, of the type that may be needed to support the operations of a telecommunications network operator, there may be a need for many users to perform data base applications which involve, in addition to reading data, amending data on the- data base, deleting data on the database, or creating new data. The operations of creating, reading, updating and deleting data are frequently referred to by their initial letters as CRUD.

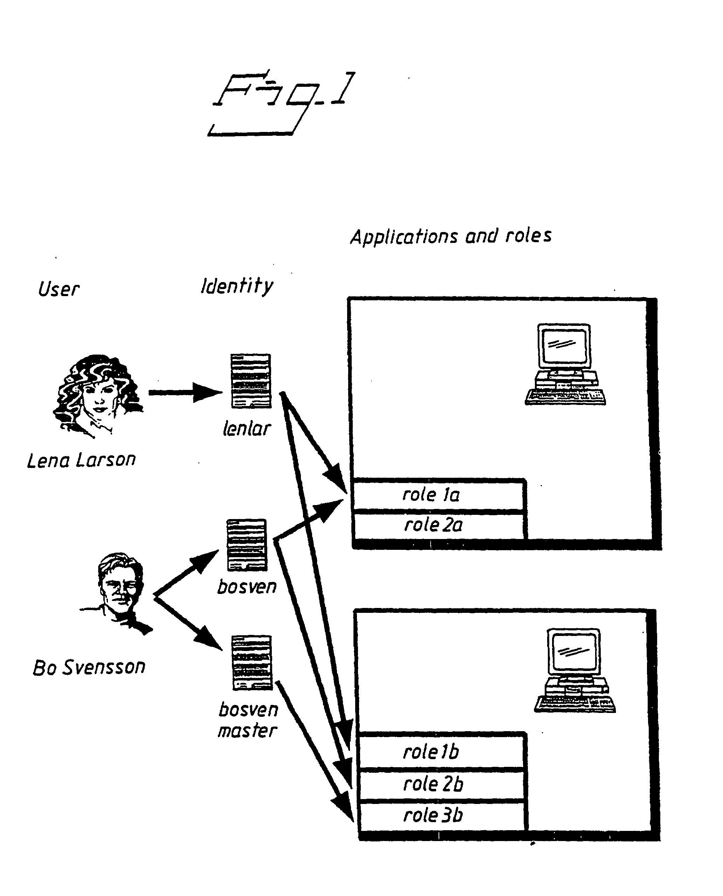

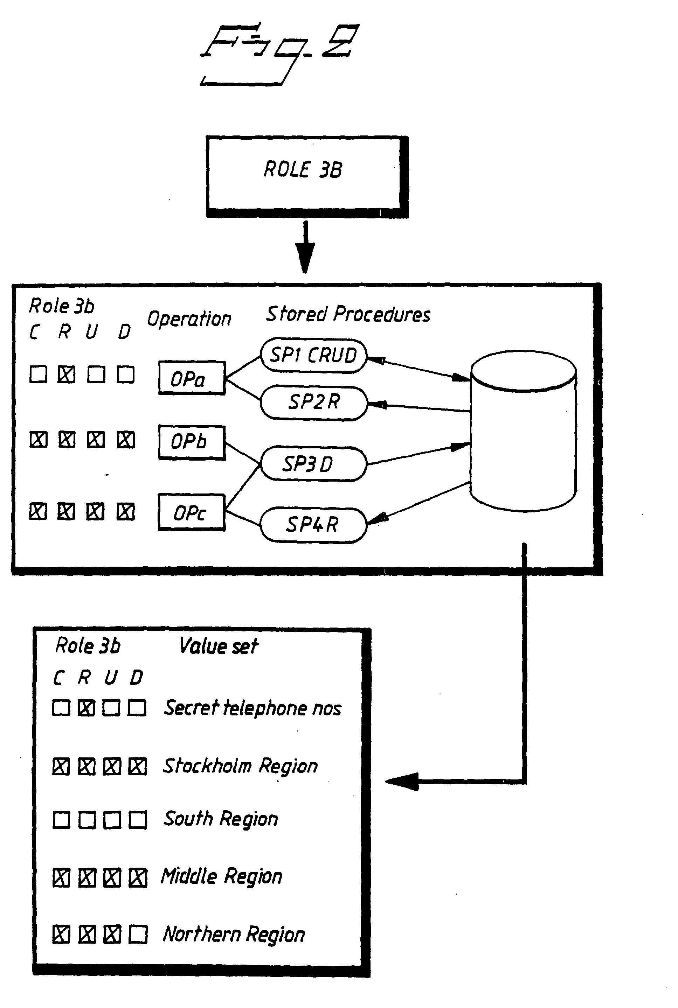

The relationship between a user, a user identity, a role and an application are illustrated in schematic form in Figures 1 and 2. Consider two individual users, of the very large number of total users of the database, perhaps as many as 10,000, called Lena Larson and Bo Svensson. Lena's system identity is "lenlar", and it is unique to her, Bo's computer identity is "bosven" and it is again unique to him. In addition, Bo has a second computer identity, "bosvem-master", which he uses only when accessing certain secret data for which he has special authority to access. For each identity there exists a secret password known only to the user. By entering their computer names and passwords, Bo and Lena get very limited access to the SQL file server.

To obtain the ability to run an application on the SQL file server, a further log-in procedure is performed automatically by the SQL file server. This will be described later. Of the many applications chat can be run on the SQL file server, two are referred to, in the drawings, as application A and application B. For each of these applications a number of different roles can be defined, e.g. roles 1, 2 and 3. Performance of a given application may involve a number of separate data base procedures, accessed, for example, via a menu.

Consider role 3B, that is to say role 3 performed in respect of application B. It is assumed that this application involves three operations OPa, OPb, and OPc. These three operations each use a different set of stored procedures SP1 .... SP4. Each of these procedures involves a number of basic data base functions, e.g. SP1 requires the create, read, update and delete functions, while SP3 involves only the delete function. By applying role 3 to application B which operates on data relating to telephone numbers, a series of actions and access rights are defined. For example, role 3B, which is only available to Bo when using the computer identity "bosvem-master", enables secret telephone numbers to be read, but not created, updated, or deleted. By way of contrast, role 3B enables telephone numbers for Northern Region to be created, read and updated, but not deleted.

In use, users, such as Lena and Bo have to be registered on the open file server. This process can only be performed by the system administrator role. In order to register a user, the system administrator enters his/her personal information such as name, organisation, and telephone number, and creates a basic, or computer, identity for the user e.g. lenlar. In addition, the system administrator assigns each user a password, which the user will have to change to a secret password on first logging in to the system. Each computer identity is assigned a run time which indicates the time of day when that user is permitted to use the system.

To set up access rights for a user, the system administrator has to associate a number of roles with each data base application that the user is allowed to access. As explained above, the roles define precisely what access rights a particular user has when running a given data base application. A given individual may be assigned more than one computer identity each of which has different roles associated with it. This is advantageous when a single user may need to operate on data having different security classifications and assists in the construction of audit trails.

Access to the data base held on the information system, see Figure 4, is achieved by means of stored procedures. These procedures can create, read, update and/or delete data on the information system. In a given application, a number of operations are defined. An operation is the basic functionality seen by a user. Operations are usually selected from a menu of alternatives, or selected by operation of a specially assigned terminal key. Running a given operation either initiates a dialogue with the IS, or achieves the performance of a task in the IS. Each operation uses at least one stored procedure. These procedures are stored on the open file server. When a role is defined for an application it determines what a user who is assigned that role can do when running that application. If, for example, a user is permitted to open a dialogue with the IS, but only read the contents of stored data, this is indicated by "R", see Figure 2. Thus, for operation OPa, a user assigned role 3B is permitted to run procedures which only entail reading data, i.e. SP2. On the other hand, the user is not permitted to run procedure SP1, because this procedure requires the ability to create, read, update and delete, and role 3B is denied the right to create, update and delete within this application.

A value set is a set of criteria by which data objects are grouped. For example, all telephone subscribers in the Stockholm region represents a value set. When a role is defined, the definition includes the value sets which a user assigned that role is permitted to access, and what basic data base functions that role is permitted in respect of that value set.

In real time operation, the open server must deal with many users and the information has to be protected from unauthorised access yet be available to those who are authorised to use it. The definition of different roles enables users to be given varied access rights, depending on their particular needs. Equally, it is possible to arrange for a hierarchy of system administrators, by defining different system administration roles. In this way it is possible to have a large number of system administrators with only a few having unlimited access rights to the system, the majority having limited rights.

The totality of system users can be divided into client groups, each client representing a department, or external organisation. The use of varied administration roles can, with advantage, be implemented in a client-user hierarchy, by creating a system administrator for each client grouping with access rights limited to the needs of the client. Any changes needed to that clients overall access rights can then be achieved by a variation of the client-administrator's access rights, which must be made by one of the few central administrators. Subsequent changes to the individual user rights of users belonging to that client grouping can be implemented by the client-administrator.

The majority of system administrators thus have limited access rights, and this can be shown by the use of menus, or screen buttons, in which certain menu selections, or buttons, are faded, corresponding to menu operations denied a particular system administrator. The principle reason for showing all menu options, whether available to a particular system administrator, or not, is that it enables a common set of instruction manuals and other literature to be prepared for the system. Such documentation must, of course describe maximum functionality. Of course, it is not only system operations that may be denied to a "junior" system administrator, but also certain value sets. In other words the information that a client based administrator may access can be limited to those value sets which the client is entitled to access.

In the above description of the relationship of identities, users, roles, clients, applications, value sets and system administrators, the emphasis has been on the concepts and functionality of the system, rather than on the physical means by which that functionality is created. In general, in a system of the type described, functionality is created by means of software, i.e computer programs, data base procedures, or the like. It is, of course, possible for functionality to be created by hardware elements, or means, although except in a few cases it is not cost effective to do this. The nature of the inventions described in this specification is such that the inventive concepts reside in the methods and functionality that underlies the software. From the point of view of a practical realisation of the invention it matters little whether a "means" for performing a particular function is a logical entity, created by a computer program, or a physical entity, created by a manufacturing process.

The invention(s) herein described relate to improvements in real products and have a real and significant effect on product performance.

In general, the "means" described in this specification can readily be realised by a skilled computer programmer, familiar with modern programming techniques, from the functional/conceptual description herein provided.

The distinct and practical "real world" advantages of the user-role-application concept described above, together with the concept of a hierarchy of system administrators, are that they enable massive data bases, with large numbers of interactive system users, to be managed in a manner which preserves system integrity and data security. It enables the system to operate at substantially greater speeds and with a substantially reduced processing overhead than is the case with other known systems.

As explained above, an individual user is assigned access rights on the basis of the roles he is permitted to perform in different applications. It would, in theory, be possible to provide each user with a plurality of computer identities and passwords, one for each application he is entitled to use. This is, of course, impractical, especially when considered in relation to control access to different value sets. The present invention overcomes this problem by using a double log-in procedure.

Consider a particular user called Anders Svensson, he has a computer identity, known to himself, called "andsve" and a secret password which only he knows "pende101". There is only a very limited amount of information on the file server that can be accessed, or changed, by the computer identity "andsve" using a general program such as Excel Q+E. However, the double log-in procedure give access to a much wider range of data, on an application-by-application basis. The double log-in procedure automatically generates, within the file server, a plurality of computer identities linked to "andsve", together with associated passwords, one for each application that "andsve" is permitted to access. These user/application identities are not visible to Anders Svensson, and he is not permitted access to them. The only log-in identity and password known to Anders Svensson is "andsve" and "pende101". The log-in procedure can be written in procedure language as:
Login(andsve,pende101)
Exec Fcs_get _password_for_application-identity logout(andsve)
l o g i n ( a n d s v e # A P P L I C A T I O N ) , password_for_application-identity
....Normal function calls from client
logout(andsve#APPLICATION)

The application specific identity is composed of the identity known to the user, "andsve", and a code of eight characters for the client separated with a "#", (other separators could of course be used). Fcs_get_password_for_application-identity creates an application specific identity with a randomly generated password. This identity is given rights to perform all necessary functions in dependence on the rights of the user in this particular application.

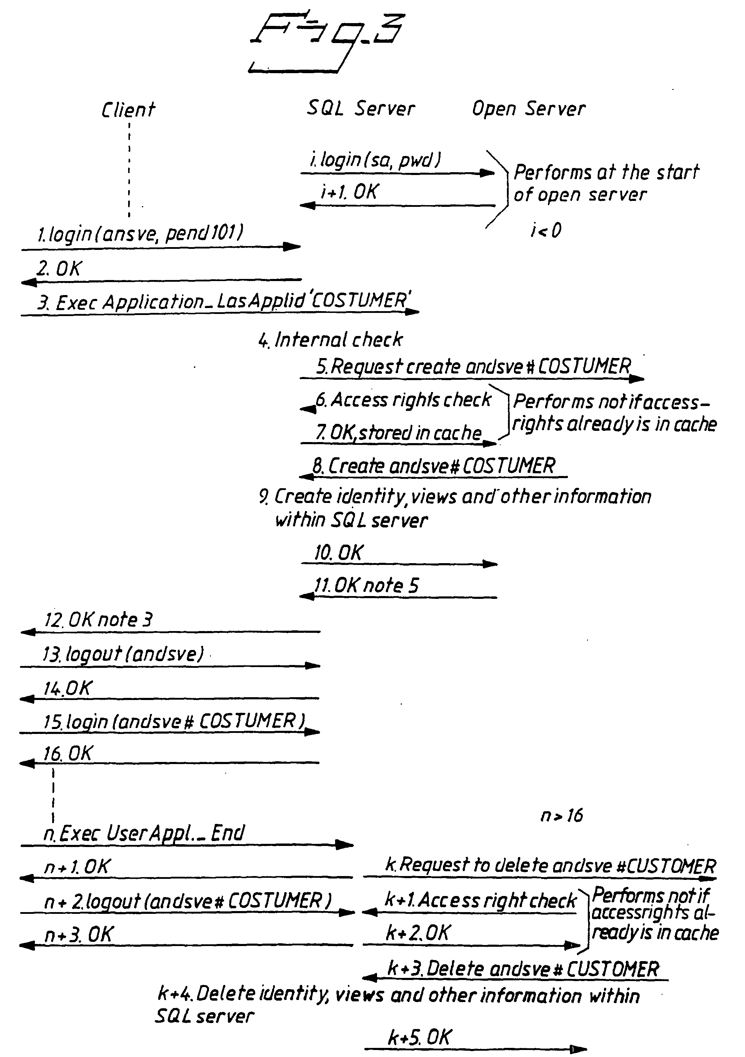

A full signal chart for the operation of the log-in is shown in Figure 3. In the example, illustrated by Figure 3, the basic, or computer identity "andsve", password "pend101", and the application code CUSTOMER are used. Note that all error handling has been omitted and that only parts of the messages of the log-in and log-out sequences are indicated. Descriptions in italic mean that the system administrator role is used, otherwise "andsve" and "andsve#CUSTOMER" are used. Brief notes on some of the signals shown in the signal chart are set out below. However, for most steps Figure 3 is self explanatory.

Instructions i, i+1, see Figure 3, are executed once at the start of the open server.
3:- Application_LasApplid(?) initiates the creation of an application specific identity. Note that all parameters are not described in the signal chart.
4:- Check that the user is defined for the indicated application, that current time is within the users allocated run time, and that there are no restrictions on the identity, or application, etc.
6, 7:- There is a general code for access control in the open server. A check is performed back into the SQL server which verifies that the user is allowed to call. In order to reduce the access time (from about 0.3 seconds to < 1ms) the information is then saved in a cache memory in the open server. This cache is cleared out only when a change in the access right is introduced.
8:- The call is made with the system administrator identity, to which the open server has access. There is no possibility of the user discovering this identity and thereby gaining a higher level access than the one for which he is authorised.
9:- The identity is created and information needed to generate views of the value sets are built together with other information in the SQL server.
11:- Again "andsve" is the identity for the signal.
12:- The result of the function called at step 3 contains the randomly generated password for andsve#CUSTOMER. It is constituted by 28 characters [32 ....255], which in addition have been DES encrypted with the password for "andsve" as key. The fulfilment of step 3 is noted to the client by an OK message.

The remaining steps in the signal chart, illustrated in Figure 3, show the identity "andsve" being logged-out, the identity "andsve#CUSTOMER" being logged-in, the execution of the called application, "CUSTOMER", and the log-out of the identity "andsve#CUSTOMER" on completion of the application "CUSTOMER".

It should be noted that the identity "andsve#CUSTOMER" contains information on both the user and the client group to which he belongs. This form of identity is a useful aid in the derivation of audit trails, statistics and debiting etc.. In comparison, prior art systems using front-end log-in control only permit breakdowns using a single common identity, management information can be derived on a user-by-application basis. For example it is possible to enable a user to obtain the answer time of the SQL server for the application he is running.

## Claims

1. A computer network, having a central processing means including a file server (SQL) on which a database is stored, a plurality of terminals adapted to communicate with said central processor, said computer network being so arranged that a large plurality of users has access to said database, which database contains value sets having a plurality of security ratings in respect of which a plurality of data base applications can be operated, **characterised in that**, there are provided access means for controlling access rights to the data base, for each user (lenlar,bosven), said access means including first storage means on which are stored a plurality of data base roles (1a,1b,2a,2b,3b), said access means being arranged to define access rights for each user by combining a selected number of roles with each data base application to which a user is permitted access, generator means for automatically generating a set of access rights for a given user when said user logs-in to a given application, and second storage means, which is a cache memory, for storing said access rights on the file server on said cache memory at least while a data base application to which said access rights relate is running on said file server, and **in that** deletion means are provided for deleting said access rights from said second storage means when said user logs-out from said data base application.

2. A computer network as claimed in any previous claim **characterised in that** more than 500 users have access so said data base.

3. A computer network as claimed in claim 2, **characterised in that** more than 5,000 users have access to said data base.

4. A computer network as claimed in either claim 2, or 3, **characterised in that** the number of roles is substantially less than the number of users.

5. A computer network as claimed in any previous claim, **characterised in that** certain roles enabled a user, assigned those roles, to perform at least some system administration functions.

6. A computer network as claimed in any previous claim, **characterised in that** said roles are defined in terms of system procedures which can be performed in relation to the different value sets held in said data base.

7. A computer network as claimed m claim 6, **characterised in that** said system procedures are, for the purposes of role definition, classified by four basic data operations, namely, create, update and delete as applied to given value sets.

8. A computer network as claimed in any previous claim **characterised in that** said access means operate by running a data base procedure which determines the access right for a given user, in respect of a given data base application.

9. A data base, stored on a file server (SQL), to which a large number of users has access, containing value sets having a plurality of security ratings in respect of which a plurality of data base applications can be operated, **characterised by** means for determining, for each user (lenlar,bosven), access rights to the data base by establishing a plurality of data base roles (1a,1b,2a,2b,3b), means for defining access rights for each user by combining a selected number of roles with each database application to which a user is permitted access, said file server comprising means for automatically generating a set of access rights for a given user when said user logs-in to a given application, means for storing said access rights on a file server memory, which is a cache memory, at least while a data base application to which said access rights relate is running on said file server, and means for deleting said access rights from said file server memory when said user logs out from said data base application.

10. A data base as claimed in claim 9, **characterised in that** more than 500 users have access to said data base.

11. A data base as claimed in claim 10, **characterised in that** more than 5,000 users have access to said data base.

12. A data base as claimed in either claim 10 or 11 **characterised in that** the number of roles is substantially less than the number of users.

13. A data base as claimed in any of claims 9 to 12, **characterised by** means for enabling a user assigned to certain roles to perform at least some system administration functions.

14. A data base as claimed in any of claims 9 to 13, **characterised by** means for defining said roles in terms of system procedures which can be performed in relation to the different value sets held in said data base .

15. A data base is claimed in claim 14, **characterised in that** said system procedures are, for the purposes of role definition, classified by four basic data base operations, namely create, read, update and delete as applied to given value sets.

16. A data base as claimed in any of claims 9 to 15, **characterised by** means for determining the access rights for a given user, in respect of a given database application by running a data base procedure.

17. Method for a computer network, having a central processing means including a file server (SQL) on which a data base is stored, a plurality of terminals adapted to communicate with said central processor, said computer network being so arranged that a large plurality of users has access to said data base, and said data base containing value-sets having a plurality of security ratings in respect of which a pluriality of data base applications can be operated, said method setting access rights for each of said plurality of users (lenlar,bosven) and **characterised by** performance of the following steps:
- establishing a plurality of data base roles ;
- defining access rights for each user by combining a selected number of roles (1a,1b,2a,2b,3b) with each data base application to which a user is permitted access;
- automatically generating with said file server, a set of access rights for a given user when said user logs-in to a given application;
- storing said access rights on a file server memory, which is a cache memory, while a data base application to which said access rights relate is running on said file server; and
- automatically deleting access rights from said file server memory when said user logs-out from said data base application.

18. A method as claimed in claim 17, **characterised in that** more than 500 users have access to said data base.

19. A method as claimed in claim 18, **characterised in that** more than 5, 000 users have access to said data base .

20. A method as claimed in either claim 18, or 19, **characterised by** defining substantially fewer roles than the number of users.

21. A method as claimed in any of claims 17 to 20, **characterised by** defining some roles that enable a user assigned those roles to perform at least some system administration functions.

22. A method as claimed in any of claims 17 to 21, **characterised by** defining said roles in terms of system procedures which can be performed in relation to the different value sets held in said data base.

23. A method as claimed in claim 22, **characterised by** classifying said system procedures, for the purposes of role definition, by which of the four basic data base operations, namely create, read, update and delete are applied by said system procedures to given value sets.

24. A method as claimed in any of claims 17 to 23, **characterised by** determining the access rights for a given user, in respect of a given data base application by running a data base procedure.

## Patentansprüche

1. Computernetzwerk mit einer zentralen Recheneinheit mit einem File-Server (SQL) auf welchem eine Datenbasis gespeichert ist, eine Vielzahl von Terminals, die mit dem Zentralprozessor kommunzieren können, wobei das Computernetzwerk so angeordnet ist, daß eine große Vielzahl von Nutzern Zugriff zu der Datenbasis haben, welche Wertesätze enthält, die eine Vielzahl von Sicherheitsklassen haben, in Bezug auf welche eine Vielzahl von Datenbasisanwendungen durchgeführt werden können,
**dadurch gekennzeichnet, daß** eine Zugriffsvorrichtung vorgesehen ist zum Kontrollieren von Zugriffsrechten zu der Datenbasis für jeden Nutzen (lenlar, bosven), wobei die Zugriffsvorrichtung aufweist eine erste Speichervorrichtung auf welcher eine Vielzahl von Datenbasisfunktionen (1a, 1b, 2a, 2b, 3b) gespeichert sind, wobei die Zugriffsvorrichtung angeordnet ist, um Zugriffsrechte für jeden Nutzer zu definieren durch Kombination einer ausgewählten Anzahl von Funktionen mit jeder Datenbasisanwendung, zu welcher ein Nutzer zugreifen darf, mit einer Erzeugungsvorrichtung zum automatischen Erzeugen eines Satzes von Zugriffsrechten für einen gegebenen Nutzer, wenn dieser Nutzer sich in eine vorgegebene Anwendung einloggt, und eine zweite Speichervorrichtung, welche ein Cache-Speicher ist, zum Abspeichern der Zugriffsrechte auf dem File-Server auf dem Cache-Speicher mindestens während eine Datenbasis-Anwendung, auf welche sich die Zugriffsrechte beziehen, auf dem File-Server läuft, und daß eine Löschvorrichtung vorgesehen ist zum Zerstören der Zugriffsrechte aus der zweiten Speichervorrichtung, wenn sich der Nutzer aus der Datenbasisanwendung ausloggt.

2. Computernetzwerk nach Anspruch 1,
**dadurch gekennzeichnet, daß** mehr als 500 Nutzer Zugriff zu der Datenbasis haben.

3. Computernetzwerk nach Anspruch 2,
**dadurch gekennzeichnet, daß** mehr als 5000 Nutzer Zugriff zu der Datenbasis haben.

4. Computernetzwerk nach Anspruch 2 oder 3,
**dadurch gekennzeichnet, daß** die Anzahl von Funktionen im wesentlichen geringer als die Anzahl der Nutzer ist.

5. Computernetzwerk nach einem der vorangehenden Ansprüche,
**dadurch gekennzeichnet, daß** bestimmte Funktionen einen Nutzer, der auf diese Funktionen ausgezeichnet ist, betätigt, mindestens einige Systemverwaltungsfunktionen durchzuführen.

6. Computernetzwerk nach einem der vorangehenden Ansprüche,
**dadurch gekennzeichnet, daß** die Funktionen definiert sind in Einheiten von Systemprozeduren, welche in Beziehung zu den unterschiedlichen Wertesätzen, die in der Datenbasis gehalten sind, durchgeführt werden können.

7. Computernetzwerk nach Anspruch 6,
**dadurch gekennzeichnet, daß** die Systemprozeduren für den Zweck der Funktionsdefinition klassifiziert sind durch vier Basisdatenoperationen, nämlich Erzeugen, Updaten und Zerstören, wie sie auf bestimmte Wertesätze angewendet werden.

8. Computernetzwerk nach einem der vorangehenden Ansprüche,
**dadurch gekennzeichnet, daß** die Zugriffsvorrichtung arbeitet durch Laufenlassen einer Datenbasisprozedur, welche das Zugriffsrecht für einen vorgegebenen Nutzer bestimmt, in Bezug auf eine gegebene Datenbasisanwendung.

9. Datenbasis, gespeichert auf einem File-Server (SQL), zu welchem eine große Anzahl von Nutzern Zugriff hat, die Wertesätze enthält mit einer Vielzahl von Sicherheitsklassen, in Bezug auf welche eine Vielzahl von Datenbasisanwendungen betrieben werden können,
**gekennzeichnet durch** eine Vorrichtung zum Bestimmen der Zugriffsrechte für jeden Nutzer (lenlar, bosven) zu der Datenbasis **durch** Errichten einer Vielzahl von Datenbasisfunktionen (1a, 1b, 2a, 2b), eine Vorrichtung zum Definieren von Zugriffsrechten für jeden Nutzer **durch** Kombinieren einer ausgewählten Anzahl von Funktionen mit jeder Datenbasisanwendung, zu welcher einem Nutzer der Zugriff gestattet ist, wobei der File-Server eine Vorrichtung aufweist zum automatischen Erzeugen eines Satzes von Zugriffsrechten für einen gegebenen Nutzer, wenn der Nutzer sich in eine vorgegebene Anwendung einloggt, eine Vorrichtung zum Speichern der Zugriffsrechte auf einem File-Server-Speicher, welcher ein Cache-Speicher ist, zumindest während eine Datenbasisanwendung, auf welche sich das Zugriffsrecht bezieht, auf dem File-Server läuft, und eine Vorrichtung zum Löschen des Zugriffsrechts aus dem File-Server-Speicher, wenn der Nutzer sich aus der Datenbasisanwendung ausloggt.

10. Computernetzwerk nach Anspruch 9,
**dadurch gekennzeichnet, daß** mehr als 500 Nutzer Zugriff zur Datenbasis haben.

11. Computernetzwerk nach Anspruch 10,
**dadurch gekennzeichnet, daß** mehr als 5000 Nutzer Zugriff zur Datenbasis haben.

12. Computernetzwerk nach Anspruch 10 oder 11,
**dadurch gekennzeichnet, daß** die Anzahl der Funktionen im wesentlichen geringer als die Anzahl der Nutzer ist.

13. Computernetzwerk nach einem der Ansprüche 9 bis 12,
**dadurch gekennzeichnet** durch eine Vorrichtung zum Befähigen eines Nutzers, der auf bestimmte Funktionen ausgezeichnet ist, mindestens einige Systemverwaltungsfunktionen durchzuführen.

14. Computernetzwerk nach einem der Ansprüche 9 bis 13,
**gekennzeichnet durch** eine Vorrichtung zum Definieren der Funktionen in Einheiten von Systemprozeduren, die durchgeführt werden können in Bezug auf die verschiedenen Wertesätze, die in der Datenbasis gehalten sind.

15. Computernetzwerk nach Anspruch 14,
**dadurch gekennzeichnet, daß** die Systemprozeduren für den Zweck der Funktionsdefinition klassifiziert sind durch vier Basisdatenbasisoperationen, nämlich Erzeugen, Lesen, Updaten und Zerstören, wie sie auf gegebene Wertesätze angewendet werden.

16. Computernetzwerk nach einem der Ansprüche 9 bis 15,
**gekennzeichnet durch** eine Vorrichtung zum Bestimmen des Zugriffsrechts für einen gegebenen Nutzer in Bezug auf eine gegebene Datenbasisanwendung **durch** Laufenlassen einer Datenbasisprozedur.

17. Verfahren für ein Computernetzwerk mit einer zentralen Prozessoreinheit mit einem File-Server (SQL), auf welchem eine Datenbasis gespeichert ist, einer Vielzahl von Terminals, die mit dem Zentralprozessor kommunizieren können, wobei das Computernetzwerk so angeordnet ist, daß eine große Anzahl von Nutzern Zugriff auf die Datenbasis hat, und wobei die Datenbasis Wertesätze enthält, die eine Vielzahl von Sicherheitsklassen haben, in Bezug auf welche eine Vielzahl von Datenbasisanwendungen betrieben werden können, wobei das Verfahren Zugriffsrechte setzt für jeden von einer Vielzahl von Nutzern (lenlar, bosven) und
**gekennzeichnet durch** die Durchführung der folgenden Schritte:
- Errichten einer Vielzahl von Datenbasisfunktionen;
- Definieren von Zugriffsrechten für jeden Nutzer **durch** Kombination einer ausgewählten Anzahl von Funktionen (1a, 1b, 2a, 2b) mit jeder Datenbasisanwendung, zu welcher dem Nutzer der Zugriff erlaubt ist;
- automatisches Erzeugen, mit dem File-Server eines Satzes von Zugriffsrechten für einen vorgegebenen Nutzer, wenn der Nutzer sich in eine vorgegebene Anwendung einloggt;
- Speichern des Zugriffsrechts in einem File-Server-Speicher, welcher ein Cache-Speicher ist, während eine Datenbasisanwendung, auf welche sich die Zugriffsrechte beziehen, auf dem File-Server läuft; und
- automatisches Löschen der Zugriffsrechte aus dem File-Server-Speicher, wenn sich der Nutzer aus der Datenbasisanwendung ausloggt.

18. Computernetzwerk nach Anspruch 17,
**dadurch gekennzeichnet, daß** mehr als 500 Nutzer Zugriff zur Datenbasis haben.

19. Computernetzwerk nach Anspruch 18,
**dadurch gekennzeichnet, daß** mehr als 5000 Nutzer Zugriff zur Datenbasis haben.

20. Computernetzwerk nach Anspruch 18 oder 19,
**gekennzeichnet durch** Bestimmen von im wesentlichen weniger Funktionen als die Anzahl der Nutzer.

21. Computernetzwerk nach einem der Ansprüche 17 bis 20,
**gekennzeichnet durch** Bestimmen einiger Funktionen, die einen Nutzer, der für diese Funktionen ausgezeichnet ist, befähigen, mindestens einige Systemverwaltungsfunktionen durchzuführen.

22. Computernetzwerk nach einem der Ansprüche 17 bis 21,
**gekennzeichnet durch** Bestimmen der Funktionen in Einheiten von Systemprozeduren, die in Bezug auf die verschiedenen Wertesätze, die in der Datenbasis gehalten sind, durchgeführt werden können.

23. Computernetzwerk nach Anspruch 22,
**gekennzeichnet durch** Klassifizieren der Systemprozeduren für den Zweck der Funktionsdefinition **durch** welche der vier Basisdatenbasisoperationen, nämlich Erzeugen, Lesen, Updaten und Zerstören zugeführt werden **durch** die Systemprozeduren auf gegebene Wertesätze.

24. Computernetzwerk nach einem der Ansprüche 17 bis 23,
**gekennzeichnet durch** Bestimmen der Zugriffsrechte für einen vorgegebenen Nutzer in Bezug auf eine gegebene Datenbasisanwendung **durch** Laufenlassen einer Datenbasisprozedur.

## Revendications

1. Réseau informatique, ayant un processeur central incluant un serveur de fichiers (SQL) sur lequel est stockée une base de données, une pluralité de terminaux prévus pour communiquer avec le dit processeur central, le dit réseau informatique étant agencé de sorte qu'un grand nombre d'utilisateurs ont accès à la dite base de données, cette base de données contenant des ensembles de valeurs ayant une pluralité de classes de sécurité en fonction desquelles on peut effectuer une pluralité d'applications de base de données, **caractérisé en ce qu'**il est prévu des moyens d'accès pour déterminer les droits d'accès à la base de données, pour chaque utilisateur (lenlar, bosven), les dits moyens d'accès incluant des premiers moyens de stockage sur lesquels sont stockés une pluralité de rôles de base de données (1a, 1b, 2a, 2b, 3b), les dits moyens d'accès étant agencés pour définir les droits d'accès pour chaque utilisateur par combinaison d'un nombre choisi de rôles avec chaque application de base de données à laquelle un utilisateur est autorisé à accéder, des moyens de génération pour engendrer automatiquement un ensemble de droits d'accès pour un utilisateur donné lorsque le dit utilisateur se connecte à une application donnée, et des deuxièmes moyens de stockage, qui sont une antémémoire, pour stocker les dits droits d'accès sur le serveur de fichiers dans la dite antémémoire au moins pendant qu'une application de base de données à laquelle les dits droits d'accès se rapportent est en exécution sur le dit serveur de fichiers, et **en ce que** des moyens d'annulation sont prévus pour effacer les dits droits d'accès des dits deuxièmes moyens de stockage lorsque le dit utilisateur se déconnecte de la dite application de base de données.

2. Réseau informatique selon la revendication 1, **caractérisé en ce que** plus de 500 utilisateurs ont accès à la dite base de données.

3. Réseau informatique selon la revendication 2, **caractérisé en ce que** plus de 5000 utilisateurs ont accès à la dite base de données.

4. Réseau informatique selon la revendication 2 ou 3, **caractérisé en ce que** le nombre de rôles est sensiblement inférieur au nombre d'utilisateurs.

5. Réseau informatique selon une quelconque des revendications précédentes, **caractérisé en ce que** certains rôles permettent à un utilisateur, à qui ces rôles sont attribués, d'effectuer au moins certaines fonctions d'administration de système.

6. Réseau informatique selon une quelconque des revendications précédentes, **caractérisé en ce que** les dits rôles sont définis en termes de procédures de système qui peuvent être exécutées en relation aux différents ensembles de valeurs contenus dans la dite base de données.

7. Réseau informatique selon la revendication 6, **caractérisé en ce que** les dites procédures de système sont classées, pour les besoins de définition de rôle, par quatre opérations de données de base, à savoir créer, lire, mettre à jour et effacer, appliquées à des ensembles de valeurs donnés.

8. Réseau informatique selon une quelconque des revendications précédentes, **caractérisé en ce que** les dits moyens d'accès fonctionnent par exécution d'une procédure de base de données qui détermine le droit d'accès pour un utilisateur donné, en ce qui concerne une application donnée de base de données.

9. Base de données, stockée sur un serveur de fichiers (SQL), à laquelle un grand nombre d'utilisateurs ont accès, contenant des ensembles de valeurs ayant une pluralité de classes de sécurité en fonction desquelles une pluralité d'applications de base de données peuvent être exécutées, **caractérisée en ce qu'**elle comprend des moyens de détermination, pour chaque utilisateur (lenlar, bosven), des droits d'accès à la base de données par établissement d'une pluralité de rôles de base de données (1a, 1b, 2a, 2b, 3b), des moyens de définition des droits d'accès pour chaque utilisateur par combinaison d'un nombre choisi de rôles avec chaque application de base de données à laquelle un utilisateur est autorisé à accéder, le dit serveur de fichiers comprenant des moyens de génération automatique d'un ensemble de droits d'accès pour un utilisateur donné lorsque le dit utilisateur se connecte à une application donnée, des moyens de stockage des dits droits d'accès sur une mémoire de serveur de fichiers, qui est une antémémoire, au moins pendant qu'une application de base de données à laquelle les dits droits d'accès se rapportent est en exécution sur le dit serveur de fichiers, et des moyens d'annulation des dits droits d'accès de la dite mémoire de serveur de fichiers lorsque le dit utilisateur se déconnecte de la dite application de base de données.

10. Base de données selon la revendication 9, **caractérisée en ce que** plus de 500 utilisateurs ont accès à la dite base de données.

11. Base de données selon la revendication 10, **caractérisée en ce que** plus de 5000 utilisateurs ont accès à la dite base de données.

12. Base de données selon la revendication 10 ou 11, **caractérisée en ce que** le nombre de rôles est sensiblement inférieur au nombre d'utilisateurs.

13. Base de données selon une quelconque des revendications 9 à 12, **caractérisée en ce qu'**elle comprend des moyens pour permettre à un utilisateur, à qui certains rôles sont attribués, d'effectuer au moins certaines fonctions d'administration de système.

14. Base de données selon une quelconque des revendications 9 à 13, **caractérisée en ce qu'**elle comprend des moyens de définition des dits rôles en termes de procédures de système qui peuvent être exécutées en relation aux différents ensembles de valeurs contenus dans la dite base de données.

15. Base de données selon la revendication 14, **caractérisée en ce que** les dites procédures de système sont classées, pour les besoins de définition de rôle, selon quatre opérations basiques de base de données, à savoir créer, lire, mettre à jour et annuler, appliquées aux ensembles de valeurs donnés.

16. Base de données selon une quelconque des revendications 9 à 15, **caractérisée en ce qu'**elle comprend des moyens de détermination des droits d'accès pour un utilisateur donné, en ce qui concerne une application donnée de base de données par exécution d'une procédure de base de données.

17. Procédé pour un réseau informatique, ayant un processeur central incluant un serveur de fichiers (SQL) sur lequel une base de données est stockée, une pluralité de terminaux prévus pour communiquer avec le dit processeur central, le dit réseau informatique étant agencé de sorte qu'un grand nombre d'utilisateurs ont accès à la dite base de données, et la dite base de données contenant des ensembles de valeurs ayant une pluralité de classes de sécurité en fonction desquelles une pluralité d'applications de base de données peuvent être exécutées, le dit procédé établissant des droits d'accès pour chacun de la dite pluralité d'utilisateurs (lenlar, bosven), **caractérisé par** l'exécution des étapes suivantes :
établissement d'une pluralité de rôles de base de données;
définition de droits d'accès pour chaque utilisateur par combinaison d'un nombre choisi de rôles (1a, 1b, 2a, 2b, 3b) avec chaque application de base de données à laquelle un utilisateur est autorisé à accéder ;
génération automatique, avec le dit serveur de fichiers, d'un ensemble de droits d'accès pour un utilisateur donné lorsque le dit utilisateur se connecte à une application donnée;
stockage des dits droits d'accès sur une mémoire de serveur de fichiers, qui est une antémémoire, pendant qu'une application de base de données à laquelle les dits droits d'accès se rapportent est en exécution sur le dit serveur de fichiers ; et
annulation automatique des droits d'accès de la dite mémoire de serveur de fichiers lorsque le dit utilisateur se déconnecte de la dite application de base de données.

18. Procédé selon la revendication 17, **caractérisé en ce que** plus de 500 utilisateurs ont accès à la dite base de données.

19. Procédé selon la revendication 18, **caractérisé en ce que** plus de 5000 utilisateurs ont accès à la dite base de données.

20. Procédé selon la revendication 18 ou 19, **caractérisé par** la définition d'un nombre de rôles sensiblement inférieur au nombre d'utilisateurs.

21. Procédé selon une quelconque des revendications 17 à 20, **caractérisé par** la définition de certains rôles qui permettent à un utilisateur, à qui ces rôles sont attribués, d'exécuter au moins certaines fonctions d'administration de système.

22. Procédé selon une quelconque des revendications 17 à 21, **caractérisé par** la définition des dits rôles en termes de procédures de système qui peuvent être exécutées en relation aux différents ensembles de valeurs contenus dans la dite base de données.

23. Procédé selon la revendication 22, **caractérisé par** la classification des dites procédures de système, pour les besoins de définition des rôles, par celles des quatre opérations basiques de base de données, à savoir créer, lire, mettre à jour et effacer, qui sont appliquées par les dites procédures de système à des ensembles de valeurs donnés.

24. Procédé selon une quelconque des revendications 17 à 23, **caractérisé par** la détermination des droits d'accès pour un utilisateur donné en ce qui concerne une application donnée de base de données, par exécution d'une procédure de base de données.
